# EUROPÄISCHE PATENTSCHRIFT

(11) **EP 2 671 912 B1**
(45) Veröffentlichungstag und Bekanntmachung des Hinweises auf die Patenterteilung: **22.04.2015**
(21) Anmeldenummer: 12170771.5
(22) Anmeldetag: 05.06.2012
(51) Int. Cl.: C08K 5/29

(54) **Verfahren zur Stabilisierung von Estergruppen-enthaltenden Polymeren**
Method for stabilising polymers containing ester groups
Procédé de stabilisation de polymères contenant des groupes d'esters

(43) Veröffentlichungstag der Anmeldung: 11.12.2013
(73) Patentinhaber: Rhein Chemie Rheinau GmbH, 68219 Mannheim (DE)
(72) Erfinder: Laufer, Wilhelm, 67158 Ellerstadt (DE); Eckert, Armin, 68794 Oberhausen (DE)
(74) Vertreter: Siegers, Britta

(56) Entgegenhaltungen:
- EP-A1- 0 597 382

## Beschreibung

Die Erfindung betrifft Verfahren zur Stabilisierung von Estergruppen-enthaltenden Polymeren, bei denen monomere aromatische Carbodiimide flüssigdosiert bei deren Herstellung und/oder Verarbeitung zugegeben werden.

Carbodiimide haben sich in vielen Anwendungen bewährt, z.B. als Hydrolyseschutzmittel für Thermoplasten, Polyole, Polyurethane etc.

Bevorzugt werden hierfür sterisch gehinderte Carbodiimide eingesetzt. Bekannt ist in diesem Zusammenhang vor allem 2,6-Diisopropylphenyl-Carbodiimid (Stabaxol® I der Rhein Chemie Rheinau GmbH).

Die im Stand der Technik zu diesem Zweck bekannten Carbodiimide haben jedoch die Nachteile selbst bei niedrigen Temperaturen flüchtig zu sein. Sie sind thermisch nicht stabil und zeigen in Pulverform eine starke Neigung zur Verblockung. Eingesetzt als Stabilisator in polymeren Systemen haben diese den Nachteil, dass sie nicht rieselfähig sind, und so vor der Applikation erst aufgeschmolzen und erst dann zudosiert werden können.

Es besteht daher ein Bedarf an sterisch gehinderten Carbodiimiden, die zu diesem Zweck einsetzbar sind und welche die vorgenannten Nachteile nicht aufweisen.

Aufgabe der vorliegenden Erfindung war daher die Bereitstellung eines Verfahrens zur Stabilisierung von Estergruppen-enthaltenden Polymeren, wobei die Stabilisatoren temperatur- und lagerstabil sind, dünnflüssig bereits bei Raumtemperatur vorliegen, einfach herstellbar sind und in flüssiger Form appliziert werden können.

Überraschenderweise konnte diese Aufgabe durch den Einsatz bestimmter monomerer Carbodiimide gelöst werden.

Gegenstand der vorliegenden Erfindung ist daher ein Verfahren zur Stabilisierung von Estergruppen-enthaltenden Polymeren, bei dem Carbodiimide der Formel (I) 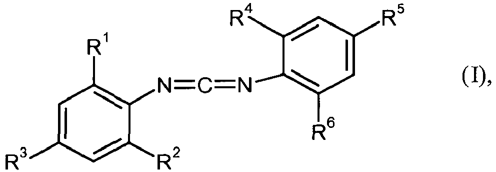
in der R¹, R², R⁴ und R⁶ unabhängig voneinander C₃-C₆-Alkyl ist,
und R³ und R⁵ unabhängig voneinander C₁-C₃-Alkyl bedeutet, flüssigdosiert in kontinuierlichen oder diskontinuierlichen Prozessen zu deren Herstellung und/oder Verarbeitung zugegeben werden.

Die C₃-C₆-Alkylreste können linear und/oder verzweigt sein. Vorzugsweise sind diese verzweigt.

In den im erfindungsgemäßen Verfahren eingesetzten Carbodiimiden der Formel (I) sind die Reste R¹ bis R⁶ vorzugsweise gleich.

In einer weiteren bevorzugten Ausführungsform der Erfindung entsprechen die Reste R¹ bis R⁶ Isopropyl.

Die Carbodiimide sind bei Raumtemperatur flüssig und haben bei 25 °C bevorzugt Viskositäten von kleiner 2000 mPas, besonders bevorzugt von kleiner 1000 mPas.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die Verbindungen der Formel (I) sind lagerstabil, bei Raumtemperatur flüssig und zeichnen sich durch eine hervorragende Dosierbarkeit aus.

Diese Carbodiimide sind herstellbar durch die Carbodiimidisierung von
trisubstituierten Benzolisocyanaten der Formel (II) 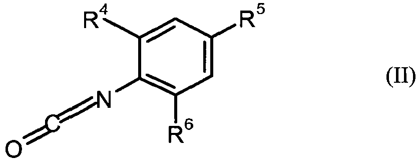 und 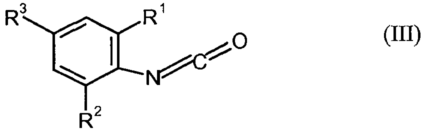
in der R¹, R², R⁴ und R⁶ unabhängig voneinander C₃-C₆-Alkyl ist
und R³ und R⁵ unabhängig voneinander C₁-C₃-Alkyl entspricht,
unter Abspaltung von Kohlendioxid bei Temperaturen von 40 °C bis 200 °C in Gegenwart von Katalysatoren und gegebenenfalls Lösungsmittel.

Bei den trisubstituierten Benzolisocyanaten handelt es sich vorzugsweise um2,4,6-Triisopropylphenylisocyanat, 2,6-Diisopropyl-4-ethylphenylisocyanat und 2,6-Diisopropyl-4-methylphenylisocyanat. Die für deren Herstellung notwendigen trisubstituierten Benzolamine können - wie dem Fachmann bekannt- über eine Friedel-Crafts Alkylierung von Anilin mit dem entsprechenden Alken, Halogenalkan, Halogenalkenbenzol und/oder Halogencycloalkan hergestellt werden.

Anschließend werden diese mit Phosgen zum entsprechenden trisubstituierten Benzolisocyanat umgesetzt.

Die Carbodiimidisierung erfolgt dabei vorzugsweise gemäß der in Angew. Chem. 93, S. 855 - 866 (1981) oder DE-A-11 30 594 oder Tetrahedron Letters 48 (2007), S. 6002 - 6004 beschriebenen Verfahren.

Als Katalysatoren für die Herstellung der Verbindungen der Formel (I) sind in einer Ausführungsform der Erfindung starke Basen oder Phosphorverbindungen bevorzugt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Alkali-, Erdalkalioxide oder -Hydroxide, -Alkoholate oder -Phenolate, Carbonsäuremetallsalze und nicht basische Organometallverbindungen verwendet werden.

Die Carbodiimidisierung kann sowohl in Substanz als auch in einem Lösemittel durchgeführt werden. Ebenfalls möglich ist es, die Carbodiimidisierung zuerst in Substanz zu starten und anschließend nach Zugabe eines Lösemittels zu vervollständigen. Als Lösemittel können z. B. Benzine, Benzol und/oder Alkylbenzole eingesetzt werden.

Vorzugsweise werden die im erfindungsgemäßen Verfahren einzusetzenden Carbodiimide vor ihrem Einsatz gereinigt. Die Reinigung der Rohprodukte kann sowohl destillativ oder mittels Extraktion erfolgen. Als geeignete Lösemittel für die Aufreinigung können z. B. Alkohole, Ketone, Ether oder Ester eingesetzt werden.

Ebenfalls möglich ist auch die Herstellung der im erfindungsgemäßen Verfahren einzusetzenden Carbodiimide aus den trisubstituierten Anilinen durch Umsetzung mit CS₂ zum Thioharnstoffderivat und anschließender Umsetzung in basischen Hypochlorit-Lösungen zum Carbodiimid oder nach den in EP 0597382A beschriebenen Verfahren.

Die Flüssigdosierung im erfindungsgemäßen Verfahren erfolgt auf diskontinuierlich oder kontinuierlich, vorzugsweise auf kontinuierlich arbeitenden Verarbeitungsmaschinen, wie z.B. Ein-, Zwei- und Mehrwellenextrudern, kontinuierlich arbeitenden Co-Knetern (Typ Buss) und/ oder diskontinuierlich arbeitenden Knetern, z.B Typ Banbury und anderen in der Polymerindustrie üblichen Aggregaten. Diese kann gleich zu Beginn oder im Verlauf der Herstellung des estergruppenhaltigen Polymeren oder gleich zu Beginn oder im Verlauf der Verarbeitung, , z.B zu Monofilamenten,oder zu Polymergranulat erfolgen.

Unter flüssigdosiert im Sinne der Erfindung wird verstanden, dass die vorgenannten Carbodiimide der Formel (I) in flüssiger Form gravimetrisch oder volumetrisch den kontinuierlich oder diskontinuierlich arbeitenden Verarbeitungsmaschinen zudosiert werden. Um dies zu ermöglichen, müssen die erfindungsgemäßen Carbodiimide bei der Dosierung flüssig und niederviskos sein, insbesondere bei Umgebungstemperatur, wie sie bei der Polymerverarbeitung üblich ist. Zur Flüssigdosierung in Verarbeitungsprozessen werden die in der Thermoplast-Compoundiertechnologie üblichen, kontinuierlich arbeitenden Dosieraggregate verwendet. Diese können beheizbar sein. Bevorzugt sind diese nicht beheizbar.

Ebenfalls möglich ist auch der Einsatz von flüssigen Mischungen aus Carbodiimiden der Formel (I) in Kombination mit anderen sterisch anspruchsvollen polymeren und/oder monomeren Carbodiimiden, wie z. B. polymeres Carbodiimid auf Basis von Tetramethylxylylendiisocyanat und/oder (Bis-2,6-Diisopropylphenyl-Carbodiimid).

Der Begriff kontinuierlicher Prozess bedeutet im Sinne der Erfindung, dass alle Rezepturbestandteile, inklusive des flüssigen Carbodiimids, zu jedem Zeitpunkt der Dosierung und Verarbeitung den in der Rezeptur vorgeschriebenen Massenanteil aufweisen.

Der Begriff diskontinuierlicher Prozess bedeutet im Sinne der Erfindung, dass alle Rezepturbestandteile, inklusive des flüssigen Carbodiimids, am Ende der Dosierung den in der Rezeptur vorgeschriebenen Massenanteil aufweisen.

Der Mengenanteil des Carbodiimids hängt von der späteren Anwendung ab und beträgt vorzugsweise 0,1 bis 5 Gew.%, besonders bevorzugt 0,5 bis 3 Gew.%, ganz besonders bevorzugt 1- 2 Gew %.

Die Flüssigdosierung des Carbodiimids erfolgt vorzugsweise bei Temperaturen von 5 bis 120 °C, bevorzugt bei 5 bis 40 °C, besonders bevorzugt bei 10 bis 35 °C.

Bei den Estergruppen-enthaltenden Polymeren handelt es sich um Polyethylenterephthalat (PET), Polybutylenterephthalat (PBT), Polytrimethylenterephthalat (PTT), thermoplastische Polyurethane (TPU), Copolyester, wie das modifizierte Polyester aus Cyclohexandiol und Terephthalsäure (PCTA), thermoplastische Polyester Elastomere (TPE E), Polymilchsäure (PLA) und/oder PLA-Derivate, Polyhydroxyalkanoate (PHA), stärkebasierte Kunststoffe, und/oder Polyamide (PA), wie z.B. Polyamid 6, 6.6, 6.10, 612. 10, 11, 12, oder in Blends, wie z.B. PA/PET- oder PHA/PLA-Blends. Hierbei handelt es sich um kommerziell erhältliche Polymere.

Als Beispiele für die Herstellung der Estergruppen- enthaltenden Polymere und deren Verarbeitung sind zum einen thermoplastische Polyurethane (TPU) zu nennen. Diese werden während der Verarbeitung polykondensiert. Dazu werden alle Rohstoffe und Additive in flüssiger und/oder fester Form gleichzeitig dem Compoundextruder in kontinuierlicher Weise zugeführt. Im Compoundextruder erfolgt die Vermischung und Polyaddition zum fertigen, polymeren, additivierten Thermoplasten, TPU.

Zum anderen ist Polyethylenterephthalat (PET) zu nennen, welches seine Additivierung erst nach erfolgter Polykondensation, durch kontinuierliche Zudosierung von flüssigen Carbodiimiden zum geschmolzenen PET im Compoundextruder mittels kontinuierlicher Dosieraggregate erfährt.

Das erfindungsgemäße Verfahren ermöglicht vor allem die Stabilisierung gegenüber Hydrolyse für Polymere des Typs Polyethylenterephthalat (PET), Polybutylenterephthalat (PBT), Polytrimethylenterephthalat (PTT), thermoplastische Polyurethane (TPU), Copolyester, thermoplastische Polyester Elastomere (TPE E), Polymilchsäure (PLA) und/oder PLA-Derivate, Polyhydroxyalkanoate (PHA), stärkebasierte Kunststoffe und/oder Polyamide (PA) oder deren Blends.

Die nachfolgenden Beispiele dienen der Erläuterung der Erfindung, ohne dabei limitierend zu wirken.

### Ausführungsbeispiele

Es wurde ein flüssiges polymeres Carbodiimid auf Basis von Tetramethylxylylendiisocyanat, erhältlich unter der Bezeichnung Stabaxol® P 200 sowie ein monomeres Carbodiimid (Bis-2,6-Diisopropylphenyl-Carbodiimid), erhältlich unter der Bezeichnung Stabaxol® I der Firma Rhein Chemie Rheinau GmbH im Vergleich zum erfindungsgemäßen flüssigen monomeren Carbodiimid (CDII) der Formel 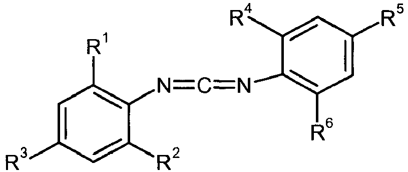 wobei die Reste R¹ bis R⁶ Isopropyl entsprechen, in Polyesterpolyol des Typs Desmophen® 2001 KS der Firma der Bayer MaterialScience AG geprüft.

### Herstellung des erfindungsgemäß eingesetzten Carbodiimides

In einem ausgeheizten und mit Stickstoff befüllten 500 mL Planschliffkolben wurden unter Stickstoffstrom 400 g 2,4,6-Triisopropylphenylisocyanat vorgelegt und auf 140 °C erwärmt. Nach Zugabe von 400 mg 1-Methyl-phospholenoxid wurde das Reaktionsgemisch innerhalb von 5 Stunden auf 160 °C erhitzt. Im Anschluss wurde bei 160 °C solange nachreagiert, bis ein NCO-Gehalt von < 1 % (entspricht > 95 % Umsatz) erreicht worden war. Das so erhaltene Rohprodukt wurde mittels Destillation gereinigt. Das erhaltene Produkt war eine helle gelbe Flüssigkeit mit der Viskosität von 700 mPas bei 25 °C.

### Thermische Stabilität

Zur Untersuchung der thermischen Stabilität wurden thermogravimetrische Analysen mit einer TGA-Messeinrichtung der Fa. Mettler Toledo (TGA851) durchgeführt. Dafür wurden je 10 - 15 mg Proben unter Stickstoff mit einer Temperaturrampe von 30 bis 600 °C bei einer Heizrate von 10 °C / min analysiert. Bewertet wurde die Temperatur in °C beim Erreichen eines Gewichtverlustes von 5 % [T(5%)].

Die Ergebnisse werden in Tabelle 1 dargestellt:

| **Carbodiimid** | T(5%) **von Carbodiimid [°C]** |
|---|---|
| **Stabaxol® I (V)** | **200** |
| **Stabaxol® P 200 (V)** | **270** |
| **CDI I (erf)** | **260** |

| | |
|---|---|
| V = Vergleichsbeispiel, erf = erfindungsgemäß | |

### Säurezahlabbau in Polyesterpolyol

Wie bekannt, kann die Wirkung eines Hydrolyseschutzmittels auf Basis sterisch gehinderter Carbodiimide in flüssigen Polyesterpolyolen mittels Säureabbau geprüft werden.

Der Säurezahlabbau wurde beim Einsatz des CDI I im Vergleich zu den oben genannten Stabaxol®I und Stabaxol® P 200 in dem Polyesterpolyol Desmophen® 2001 KS der Bayer MaterialScience AG geprüft.

Dazu wurden bei 80°C 1 Gew.% der oben genannten Carbodiimide in Polyesterpolyol mit einer gemessenen Säurezahl von ca. 0,9 mg KOH/g eingerührt und regelmäßig die Säurezahl gemessen.

Die Ergebnisse werden in Tabelle 2 dargestellt:

| **Carbodiimid in Desmophen® 2001 KS** | **Säurezahl [mg KOH/g] nach 0 min** | **Säurezahl [mg KOH/g] nach 30 min** | **Säurezahl [mg KOH/g] nach 60 min** | **Säurezahl [mg KOH/g] nach 120 min** | **Säurezahl [mg KOH/g] nach 240 min** | **Säurezahl [mg KOH/g] nach 480 min** |
|---|---|---|---|---|---|---|
| **CDI I (erf)** | 0,86 | 0,51 | 0,27 | 0,09 | 0,00 | |
| **Stabaxol® I (V)** | 0,92 | 0,67 | 0,45 | 0,26 | 0,12 | 0,04 |
| **Stabaxol® P 200 (V)** | 0,87 | 0,69 | 0,55 | 0,42 | 0,35 | 0,28 |

| | | | | | | |
|---|---|---|---|---|---|---|
| V = Vergleichsbeispiel, erf = erfindungsgemäß | | | | | | |

Die Ergebnisse in der Tabelle 1 und 2 zeigen, dass das erfindungsgemäße Verfahren mit dem Einsatz von flüssigen monomeren Carbodiimiden, neben großen Vorteilen in der Handhabung auch zu einem sehr schnellen Säurezahlabbau bei gleichzeitig sehr guter thermischer Stabilität führt.

## Patentansprüche

1. Verfahren zur Stabilisierung von Estergruppen-enthaltenden Polymeren, **dadurch gekennzeichnet, dass** Carbodiimide der Formel (I) 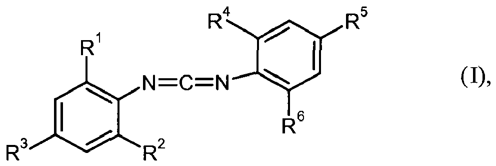
wobei R¹, R², R⁴ und R⁶ unabhängig voneinander C₃-C₆-Alkyl ist
und R³ und R⁵ unabhängig voneinander C₁-C₃-Alkyl entspricht,
in flüssiger Form (flüssigdosiert) in kontinuierlichen oder diskontinuierlichen Prozessen zu deren Herstellung und/oder Verarbeitung zugegeben werden.

2. Verfahren nach Anspruch 1, **dadurch gekennzeichnet, dass** die Reste R¹ bis R⁶ innerhalb des Moleküls gleich sind.

3. Verfahren nach Anspruch 1 oder 2, **dadurch gekennzeichnet, dass** die Reste R¹ bis R⁶ Isopropyl sind.

4. Verfahren nach einem oder mehreren der Ansprüche 1 bis 3, **dadurch gekennzeichnet, dass** die Zugabe des flüssigen Carbodiimides bei Temperaturen von 10 - 35 °C erfolgt.

5. Verfahren nach einem oder mehreren der Ansprüche 1 bis 4, **dadurch gekennzeichnet, dass** es sich bei den Polymeren um Polyethylenterephthalat (PET), Polybutylenterephthalat (PBT), Polytrimethylenterephthalat (PTT), Thermoplastische Polyurethane (TPU), Copolyester, thermoplastische Polyester Elastomere (TPE E), Polymilchsäure (PLA) und/oder PLA-Derivate, Polyhydroxyalkanoate (PHA), stärkebasierte Kunststoffe und/oder Polyamide (PA) oder deren Blends handelt.

## Claims

1. Method for stabilizing polymers containing ester groups, **characterized in that** carbodiimides of the formula (I) 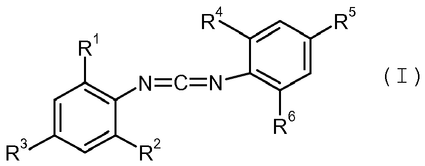
where R¹, R², R⁴ and R⁶ is each independently C₃-C₆-alkyl
and R³ and R⁵ is each independently C₁-C₃-alkyl,
are added in liquid form (liquid-dosed) in continuous or batchwise processes for preparation and/or processing thereof.

2. Method according to Claim 1, **characterized in that** the R¹ to R⁶ radicals are the same within the molecule.

3. Method according to Claim 1 or 2, **characterized in that** the R¹ to R⁶ radicals are isopropyl.

4. Method according to one or more of Claims 1 to 3, **characterized in that** the liquid carbodiimide is added at temperatures of 10-35°C.

5. Method according to one or more of Claims 1 to 4, **characterized in that** the polymers are polyethylene terephthalate (PET), polybutylene terephthalate (PBT), polytrimethylene terephthalate (PTT), thermoplastic polyurethanes (TPU), copolyesters, thermoplastic polyester elastomers (TPE E), polylactic acid (PLA) and/or PLA derivatives, polyhydroxyalkanoates (PHA), starch-based polymers and/or polyamides (PA) or blends thereof.

## Revendications

1. Procédé pour la stabilisation de polymères contenant des groupes ester, **caractérisé en ce que** des carbodiimides de formule (I) 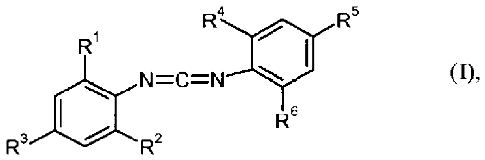
dans laquelle R¹, R², R⁴ et R⁶ représentent, indépendamment les uns des autres, C₃-C₆-alkyle
et R³ et R⁵ représentent, indépendamment l'un de l'autre, C₁-C₃-alkyle,
sont ajoutés sous forme liquide (dosage liquide) dans des procédés continus ou discontinus pour leur préparation et/ou traitement.

2. Procédé selon la revendication 1, **caractérisé en ce que** les radicaux R¹ à R⁶ au sein de la molécule sont identiques.

3. Procédé selon la revendication 1 ou 2, **caractérisé en ce que** les radicaux R¹ à R⁶ représentent isopropyle.

4. Procédé selon l'une ou plusieurs des revendications 1 à 3, **caractérisé en ce que** l'addition du carbodiimide liquide est réalisée à des températures de 10-35°C.

5. Procédé selon l'une ou plusieurs des revendications 1 à 4, **caractérisé en ce qu'**il s'agit, pour les polymères, de poly(téréphtalate d'éthylène) (PET), de poly(téréphtalate de butylène) (PBT), de poly(téréphtalate de triméthylène) (PTT), de polyuréthanes thermoplastiques (TPU), de copolyesters, d'élastomères thermoplastiques de polyester (TPE E), de poly(acide lactique) (PLA) et/ou de dérivés de PLA, de polyhydroxyalcanoates (PHA), de matériaux synthétiques à base d'amidon et/ou de polyamides (PA) ou de leurs mélanges.
